(19) Europäisches Patentamt

European Patent Office

Office européen des brevets

(11) Veröffentlichungsnummer: **0 259 823**
**A2**

# (12) EUROPÄISCHE PATENTANMELDUNG

(21) Anmeldenummer: **87113075.3**

(22) Anmeldetag: **08.09.87**

(51) Int. Cl.4: **A01M 23/18**

(30) Priorität: **09.09.86 DE 3630576**

(43) Veröffentlichungstag der Anmeldung:
**16.03.88 Patentblatt 88/11**

(84) Benannte Vertragsstaaten:
**BE FR NL**

(71) Anmelder: **Jäger, Heinz**
**Johowstrasse 22**
**D-4390 Gladbeck(DE)**

(72) Erfinder: **Jäger, Heinz**
**Johowstrasse 22**
**D-4390 Gladbeck(DE)**

(74) Vertreter: **Spalthoff, Adolf, Dipl.-Ing.**
**Pelmanstrasse 31 P.O. Box 34 02 20**
**D-4300 Essen 1(DE)**

(54) **Falle für Mäuse und Ratten.**

(57) Die Erfindung betrifft eine Falle für Mäuse und Ratten, welche ein käfigartiges Gehäuse aufweist. Da die bekannten Fallen für Mäuse und Ratten einerseits sowie für Wühlmäuse andererseits mit erheblichen Nachteilen behaftet sind, wie u.a. schwierige Handhabung, nicht exaktes Ansprechen usw., liegt der Erfindung die Aufgabe zugrunde, unter Vermeidung vorerwähnter Nachteile, eine Falle zu schaffen, welche nicht nur zum Fangen von Mäusen und Ratten, sondern auch von Wühlmäusen geeignet ist und außerdem über eine leichte und sichere Handhabung mit hoher Ansprechgenauigkeit verfügt. Erfindungsgemäß wird dies dadurch erreicht, daß im Boden (3) des Gehäuses (2) ein Schlupfloch (4) vorgesehen ist, in dessen Bereich im Gehäuse beiderseits desselben Führungsschienen (5) angeordnet sind, in denen sich ein dem Schlupfloch (4) zugeordneter Schieber (7) befindet, an dem ein aus dem Dachbereich des Gehäuses (2) herausgeführter Hebel (8) mit seinem einen Ende gelenkig befestigt ist, welcher in einem Bügel (10) des Gehäuses (2) schwenkbar ist und dessen anderes Ende mit einem Gewicht (9) ausgerüstet ist, wobei an dem dem Schlupfloch (4) abgewandten End des Schiebers (7) ein sich nach außen erstreckender Stellhaken (12) angebracht ist und diesem Ende des Schiebers (7) in dessen Offenstellung ein Arretierungshaken (13) des Gehäuses (2) zugeordnet ist. Das Schlupfloch (4) befindet sich in einem Endbereich des Gehäuses (2).

## "Falle für Mäuse und Ratten"

Die Erfindung betrifft eine Falle für Mäuse und Ratten, welche ein käfigartiges Gehäuse aufweist.

Es ist eine Falle für Mäuse und Ratten bekannt, die einen aus Drahtstäben gitterartig ausgeführten Käfig aufweist. An dem einen Ende des Käfigs ist an dessen Dachbereich eine Klapptür gelagert, welche mit einer Zugfeder verbunden ist, die beim Öffnen der Klapptür gespannt wird und mittels eines Hakens arretiert wird. Am anderen Ende des Käfigs ist ein Köder vorgesehen. Wenn das zu fangende Tier auf eine den Köder tragende, schwenkbare Platte tritt, wird die Feder ausgelöst, so daß die Klapptür zuschwenkt. Nachteilig erweist sich bei diesen Fallen, daß der Köder sehr schlecht anzubringen ist, weil sich dieser an dem der Klapptür abgewandten Ende des Käfigs befindet und außerdem das Spannen der Feder sehr - schwierig ist, weil der Arretierungshaken genau einjustiert werden muß, so daß sich dieser entweder viel zu schwer oder aber viel zu leicht löst mit der Folge, daß das Tier nicht gefangen wird.

Zum Fangen von Wühlmäusen ist eine Falle bekannt, welche aus zwei scherenartig miteinander verbundenen Hebeln besteht, zwischen denen eine Spannfeder angebracht ist. Die Enden der Hebel sind U-förmig ausgebildet und an ihren einander zugewandten Kanten mit Zähnen besetzt. Das Spannen der Falle erfolgt durch einen Einsatz, welcher zwischen die unteren Enden der Hebel eingesetzt wird. Bei Gegenlaufen gegen den Einsatz wird die Falle ausgelöst, so daß die Enden der Hebel zuschnappen. Auch diese bekannte Falle weist den Nachteil auf, daß sie nur sehr schwierig zu spannen ist und entweder zu spät oder aber zu früh anspricht.

Von diesem Stand der Technik ausgehend liegt der Erfindung die Aufgabe zugrunde, unter Vermeidung vorerwähnter Nachteile eine Falle der eingangs genannten Art zu schaffen, welche nicht nur zum Fangen von Mäusen und Ratten, sondern auch von Wühlmäusen geeignet ist und über eine leichte und sichere Handhabung mit hoher Ansprechgenauigkeit verfügt.

Gemäß der Erfindung wird dies dadurch erreicht, daß im Boden des Gehäuses ein Schlupfloch vorgesehen ist, in dessen Bereich im Gehäuse beiderseits desselben Führungsschienen angeordnet sind, in denen sich ein dem Schlupfloch zugeordneter Schieber befindet, an dem ein aus dem Dachbereich des Gehäuses herausgeführter Hebel mit seinem einen Ende gelenkig befestigt ist, welcher in einem Bügel des Gehäuses schwenkbar ist und dessen anderes Ende mit einem Gewicht ausgerüstet ist, wobei dem dem Schlupfloch abgewandten Ende des Schiebers in dessen Offenstellung ein Arretierungshaken des Gehäuses zugeordnet ist. Vorteilhaft ist an dem dem Schlupfloch abgewandten Ende des Schiebers ein sich nach außen erstreckender Stellhaken angebracht. Durch das Vorhandensein eines Schlupfloches im Bodenbereich des Gehäuses ist es möglich, sowohl Mäuse und Ratten mittels eines Köders zu fangen, als auch Wühlmäuse ohne Köder, wobei das Schlupfloch dann auf die Öffnung eines Ganges der Wühlmäuse aufgesetzt wird. Mittels des von aussen zu betätigenden Stellhakens ist ein leichtes Spannen des Schiebers möglich, da dieser lediglich mit seinem freien Ende in den Arretierungshaken des Gehäuses eingehängt zu werden braucht. Sobald das zu fangende Tier durch das Schlupfloch in das Gehäuse gelangt ist und auf das in seiner Offenstellung leicht angehobene freie Ende des Schiebers tritt, wird dieses Ende nach unten bewegt, so daß der Arretierungshaken den Schieber freigibt und dieser unter der Wirkung des Gewichtes an dem nach außen geführten Ende des Hebels eine Verschiebebewegung in seine Schließstellung ausführt, in welcher das Schlupfloch von diesem überdeckt ist. Durch eine am Gehäuse vorgesehene Tür ist es möglich, das gefangene Tier aus dem Gehäuse zu entfernen.

Das Schlupfloch befindet sich in einem Endbereich des Gehäuses, so daß sich eine baulich kompakte Ausführung ergibt.

Die Führungsschienen sind auf dem Boden des Gehäuses im Bereich der Seitenwandungen desselben angeordnet, so daß sich der in diesem geführte Schieber unmittelbar oberhalb des Bodens und damit in seiner Schließstellung unmittelbar oberhalb des Schlupfloches befindet, so daß ein Entweichen des in dem Gehäuse befindlichen Tieres unmöglich ist. Zu diesem Zwecke sind auch die Führungsschienen über einen Steg an einer Querwandung des Gehäuses miteinander verbunden, so daß in der Schließstellung des Schiebers auch dessen anderes Ende in dem Steg gehalten ist. Sowohl die Führungsschienen als auch der Steg besitzen zu diesem Zwecke U-förmigen Querschnitt.

Vorteilhaft ist der Hebel bogenförmig gestaltet, so daß sich bei relativ kleinen Abmessungen desselben doch eine gute Hebelwirkung erreichen läßt.

Der Bügel des Gehäuses ist als dessen Traggriff ausgebildet, so daß eine doppelte Nutzung gegeben ist. Der Bügel weist zwei mit geringem Abstand und parallel zueinander verlaufende Bogenstücke auf, zwischen denen der Hebel geführt ist, so daß sein mittlerer Bereich seinen Schwenkbereich darstellt.

Der Schieber ist an seinem freien Ende mit einer Durchtrittsöffnung für den Arretierungshaken des Gehäuses ausgerüstet, welcher an dessen Boden frei vorragend angeordnet ist. Zum Arretieren des Schiebers ist es erforderlich, dessen freies Ende leicht nach unten zu drücken, so daß dessen Durchtrittsöffnung unter das abgebogende Ende des Arretierungshakens geschoben werden kann.

Gemäß einem weiteren Merkmal der Erfindung ist das Gehäuse auf an seinen beiden Enden vorgesehene Ständer aufgesetzt, welche mit diesem - schwenkbar verbunden sind. In der abgeklappten Lage der Ständer befindet sich ein der Höhe der Ständer entsprechender Zwischenraum zwischen dem Boden des Gehäuses und dem Boden, auf den die Falle aufgesetzt ist, so daß Haus-und Feldmäuse sowie Ratten durch das Schlupfloch gelangen können. Für das Fangen von Wühlmäusen werden die Ständer hochgeklappt, so daß der Boden des Gehäuses mit dem Schlupfloch unmittelbar auf die Öffnung eines Ganges im Boden aufgesetzt werden kann. Somit eignet sich die erfindungsgemäße Falle sowohl zum Fangen von Mäusen und Ratten mittels eines Köders als auch zum Fangen von Wühlmäusen ohne Köder. Die Ständer bestehen aus U-förmigen Drahtstücken, deren abgebogene Enden die Schwenkachsen bilden, so daß sich eine sehr einfache Ausgestaltung und Handhabung ergibt.

Im Dachbereich des Gehäuses ist ein Köderhaken befestigt, welcher sich im Bereich der Offenstellung des Schiebers befindet. Sobald das zu fangende Tier in diesen Bereich des Schiebers gelangt, um den auf dem Köderhaken befindlichen Köder zu erfassen, löst sich das freie Ende des Schiebers unter dem Gewicht des zu fangenden Tieres aus dem Arretierungshaken und gelangt unter der Wirkung des Gewichtes am freien Ende des Hebels in seine das Schlupfloch überdeckende Schließstellung.

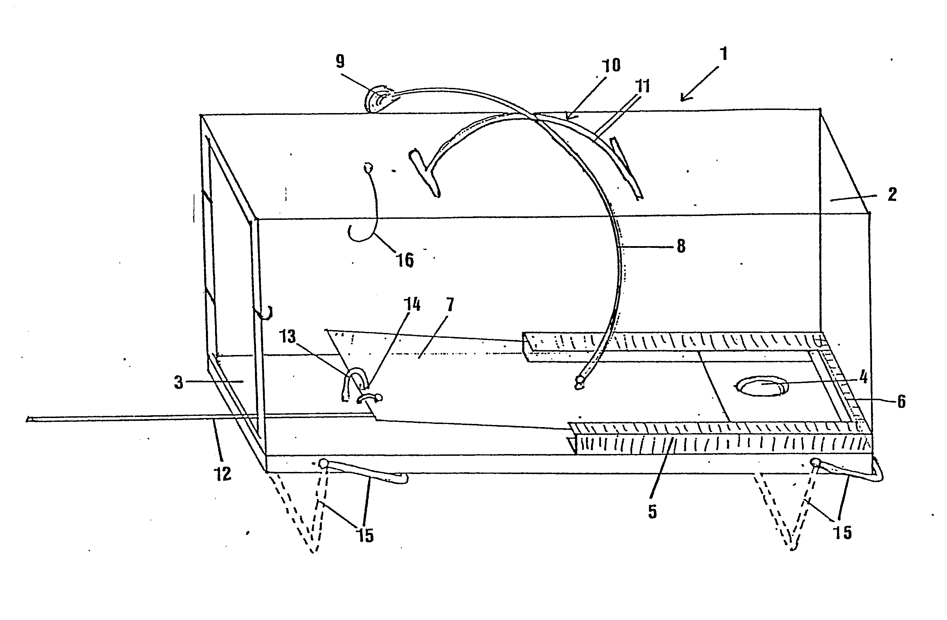

Ein Ausführungsbeispiel der Erfindung ist an Hand der Zeichnung näher erläutert, und zwar zeigt diese in schaubildlicher und schematischer Darstellung eine Seitenansicht der Falle.

Mit 1 ist die Falle bezeichnet, welche ein käfigartiges Gehäuse 2 aufweist, welches bis auf dessen festen Boden 3 aus gitterartigen Drahtstäben besteht, die der Einfachheit halber nicht dargestellt sind.

Im Boden 3 des Gehäuses 2 ist in einem Endbereich desselben ein Schlupfloch 4 vorgesehen. Die Größe des Schlupfloches richtet sich ebenso wie die Größe der Falle 1 nach der Art der zu fangenden Tiere. Beispielsweise ist für eine Rattenfalle nicht nur das Gehäuse 2 größer ausgelegt als für eine Mausefalle, sondern auch das Schlupfloch 4. Beiderseits des Schlupfloches 4 sind auf dem Boden 3 des Gehäuses 2 im Bereich der Seitenwandungen derselben Führungsschienen 5 angeordnet, die über einen Steg 6 an einer Querwand des Gehäuses 2 miteinander verbunden sind. Die Führungsschienen 5 sowie der diese endseitig verbindende Steg 6 besitzen U-förmigen Querschnitt.

In den Führungsschienen 5 ist in Längsrichtung des Gehäuses 2 der Schieber 7 geführt. An dem Schieber 7 ist in dessen mittleren Bereich das eine Ende eines Hebels 8 gelenkig befestigt. Der Hebel 8 ist durch den Dachbereich des Gehäuses 2 nach außen geführt und an seinem anderen Ende mit einem Gewicht 9 ausgerüstet. In seinem mittleren Bereich ist der Hebel 8 in dem Bügel 10 - schwenkbar gelagert, welcher auch den Tragegriff der Falle 1 darstellt. Der Bügel 10 weist zwei mit geringem Abstand und parallel zueinander verlaufende Bogenstücke 11 auf, zwischen denen der Hebel 8 geführt ist.

An dem dem Schlupfloch 4 abgewandten Ende des Schiebers 7 ist an diesem ein sich durch die eine Querwand des Gehäuses nach außen ersteckender Stellhaken 12 angebracht. In der aus der Zeichnung ersichtlichen Offenstellung des Schiebers 7 ist dieser an dem Arretierungshaken 13 lösbar befestigt, welcher vom Boden 3 des Gehäuses 2 frei vorragt. Zu diesem Zwecke weist der Schieber 7 an diesem Endbereich eine Durchtrittsöffnung 14 für den Arretierungshaken 13 auf.

Das Gehäuse 2 ist auf an seinen beiden Enden vorgesehene Ständer 15 aufgesetzt, welche mit dem Gehäuse 2, insbesondere dessen Boden 3, - schwenkbar verbunden sind. Die Ständer 15 bestehen aus U-förmigen Drahtstücken, deren abgebogene Enden die Schwenkachsen bilden. Die Ständer 15 können in die in der Figur ausgezogen und strichpunktiert dargestellten Positionen verschwenkt werden.

Im Dachbereich des Gehäuses 2 ist ein in dieses hineinhängender Köderhaken 16 befestigt, welcher sich im Bereich des einen Endes des Schiebers 6 im Bereich seiner Offenstellung befindet.

Das Gehäuse 2 der Falle 1 ist an seinem dem Schlupfloch 4 abgewandten Ende mit einer nicht weiter dargestellten Tür verschließbar.

Die Wirkungsweise der erfindungsgemäß ausgebildeten Falle ist wie folgt:

Falls das zu fangende Tier mit einem Köder angelockt werden soll, wird dieser bei geöffneter Tür auf den Köderhaken 16 aufgespießt. Nach dem Schließen der Tür wird der Schieber 7 mit dem Stellhaken 12 in die aus der Zeichnung ersichtliche Offenstellung gezogen und durch leichtes Anheben wird die Durchtrittsöffnung 14 des Schiebers 7 über das freie Ende des Arretierungshakens 13 geschoben, so daß der Schieber in dieser seiner Offenstellung festgelegt ist. Wenn das zu fangende Tier durch das Schlupfloch 4 gelangt ist und auf den Schieber aufläuft, wird dessen hochgebogenes freies Ende durch das' Gewicht des Tieres nach unten gedrückt, so daß der Arretierungshaken 13 den Schieber 7 freigibt. Unter der Einwirkung des Gewichtes 9 führt nach Freigabe des Schiebers 7 der bogenförmige Hebel 8 eine Schwenkbewegung um seine Lagerstelle im Bereich des Bügels 11 aus mit der Folge, daß der Schieber 7 in seine Schließstellung gebracht wird, in welcher sich dieser unmittelbar oberhalb des Schlupfloches 4 befindet. Das im Gehäuse 2 befindliche Tier kann somit nicht mehr entweichen.

Zum Fangen von Haus-und Feldmäusen sowie von Ratten werden die Ständer 15 in die gestrichelt eingezeichneten Lagen geschwenkt, so daß zwischen dem Boden 3 des Gehäuses 2 und dem Boden, auf den die Falle 1 aufgestellt wird, ein Zwischenraum vorhanden ist, der so groß ist, daß das zu fangende Tier sich ohne weiteres unter die Falle 1 begeben und durch das Schlupfloch 4 in dessen Gehäuse gelangen kann. In der mit ausgezogenen Linien dargestellten Position der Ständer 5 dient die Falle I dem Fangen von Wühlmäusen. Zu diesem Zweck wird die Falle I mit dem Schlupfloch 4 über die Öffnung des im Boden befindlichen Ganges gestellt, so daß die Wühlmaus bei Verlassen ihres Ganges zwangsläufig in das Schlupfloch und damit in die Falle 1 gelangt.

## Ansprüche

1. Falle für Mäuse und Ratten, welche ein käfigartiges Gehäuse aufweist, dadurch gekennzeichnet, daß im Boden (3) des Gehäuses (2) ein Schlupfloch (4) vorgesehen ist, in dessen Bereich im Gehäuse beiderseits desselben Führungsschienen (5) angeordnet sind, in denen sich ein dem Schlupfloch (4) zugeordneter Schieber (7) befindet, an dem ein aus dem Dachbereich des Gehäuses (2) herausgeführter Hebel (8) mit seinem einen Ende gelenkig befestigt ist, welcher in einem Bügel (10) des Gehäuses (2) schwenkbar ist und dessen anderes Ende mit einem Gewicht (9) ausgerüstet ist, wobei dem dem Schlupfloch (4) abgewandten Ende des Schiebers (7) in dessen Offenstellung ein Arretierungshaken (13) des Gehäuses zugeordnet ist.

2. Falle nach Anspruch 1, dadurch gekennzeichnet, daß an dem dem Schlupfloch (4) abgewandten Ende des Schiebers (7) ein sich nach außen erstreckender Stellhaken (12) angebracht ist.

3. Falle nach einem der Ansprüche 1 oder 2, dadurch gekenn zeichnet, daß das Schlupfloch (4) sich in einem Endbereich des Gehäuses (2) befindet.

4. Falle nach Anspruch 1 oder einem der folgenden, dadurch gekennzeichnet, daß die Führungsschienen (5) auf dem Boden (3) des Gehäuses (2) im Bereich der Seitenwandungen desselben angeordnet sind.

5. Falle nach Anspruch 1 oder einem der folgenden, dadurch gekennzeichnet, daß die Führungsschienen (5) über einen an einer Querwandung des Gehäuses verlaufenden Steg (6) miteinander verbunden sind.

6. Falle nach Anspruch 1 oder einem der folgenden, dadurch gekennzeichnet, daß die Führungsschienen (5) und der Steg (6) U-förmigen Querschnitt besitzen.

7. Falle nach Anspruch 1 oder einem der folgenden, dadurch gekennzeichnet, daß der Hebel (8) bogenförmig gestaltet ist.

8. Falle nach Anspruch 1 oder einem der folgenden, dadurch gekennzeichnet, daß der Bügel (10) des Gehäuses (2) als dessen Traggriff ausgebildet ist.

9. Falle nach Anspruch 1 oder einem der folgenden, dadurch gekennzeichnet, daß der Bügel (10) zwei mit geringem Abstand und parallel zueinander verlaufende Bogenstücke (11) aufweist, zwischen denen der Hebel geführt ist.

10. Falle nach Anspruch 1 oder einem der folgenden, dadurch gekennzeichnet, daß der Schieber (7) an seinem freien Ende mit einer Durchtrittsöffnung (14) für den Arretierungshaken (13) des Gehäuses (2) ausgerüstet ist, welcher an dessen Boden (3) frei vorragend angeordnet ist.

11. Falle nach Anspruch 1 oder einem der folgenden, dadurch gekennzeichnet, daß das Gehäuse (2) auf an seinen beiden Enden vorgesehene Ständer (15) aufgesetzt ist, welche mit diesem schwenkbar verbunden sind.

12. Falle nach Anspruch 1 oder einem der folgenden, dadurch gekennzeichnet, daß die Ständer (15) aus U-förmigen Drahtstücken bestehen, deren abgebogene Enden die Schwenkachsen bilden.

13. Falle nach Anspruch 1 oder einem der folgenden, dadurch gekennzeichnet, daß im Dachbereich des Gehäuses (2) ein Köderhaken (16) befestigt ist, welcher sich im Bereich des Endes des Schiebers (7) in dessen Offenstellung befindet.

0 259 823